# FASCICULE DE BREVET EUROPEEN

(11) **EP 0 415 313 B1**
(45) Date de publication et mention de la délivrance du brevet: **20.12.1995**
(21) Numéro de dépôt: 90116374.1
(22) Date de dépôt: 27.08.1990
(51) Int. Cl.: G05B 5/01

(54) **Dispositif d'asservissement d'un système à contre-réaction et application aux amplificateurs et servomécanismes**
Servosteuerungsanordnung für ein System mit Rückführung und Anwendung davon bei Verstärken und Servomechanismen
Servo-control arrangement for a feedback system and application to amplifiers and servomechanisms

(30) Priorité: 30.08.1989 FR 8911386
(43) Date de publication de la demande: 06.03.1991
(73) Titulaire: GEC ALSTHOM SA, 75116 Paris (FR)
(72) Inventeur: Dupraz, Jean-Pierre, F-69003 Lyon (FR); Moncorge, Jean-Paul, F-69120 Vaux en Velin (FR)
(74) Mandataire: Weinmiller, Jürgen

(56) Documents cités:
- EP-A- 0 180 292
- GB-A- 2 013 374
- US-A- 4 341 986
- US-A- 4 549 123
- PATENT ABSTRACTS OF JAPAN vol. 8, no. 6 (P-247)(1443) 12 janvier 1984, & JP-A-58 169202 (YAMATAKE HONEYWELL K.K ) 05 octobre 1983

## Description

La présente invention concerne un dispositif d'asservissement d'un système à contre-réaction tel qu'un amplificateur ou un servomécanisme.

De tels dispositifs qui comprennent au moins une boucle de contre-réaction, présentant des imperfections notamment sur le plan de la stabilité, du fait des déphasages introduits par la chaîne directe et la boucle de contre-réaction. C'est le cas, par exemple, pour les amplificateurs à transformateur de sortie où il peut se produire des oscillations sur charge capacitive, ou pour les amplificateurs de classe D dont le fonctionnement en commutation impose un filtrage avec des inductances et des condensateurs.

Si ce déphasage atteint, pour une fréquence donnée, la valeur de 360°, un tel système oscille. Il en résulte une limitation de la plage d'utilisation relative au taux de contre-réaction (qui influe directement sur la précision) et à la bande passante. Ce système doit satisfaire à certaines exigences connues, notamment au critère de Nyquist.

Dans le document US-A-4 341 986, il est décrit un dispositif d'asservissement d'un moteur dont l'arbre est relié à un projecteur.

Ce dispositif comprend deux boucles d'asservissement, l'une pour la vitesse du moteur, l'autre pour la position du projecteur.

Les deux corrections réagissent l'une sur l'autre et la correction ne peut être atteinte qu'après plusieurs itérations.

Le document US-A-4 549 123 montre un régulateur PID qui permet d'atteindre l'équilibre par des oscillations de la phase et de l'amplitude et qui, à l'évidence, ne permet pas une régulation séparée de ces deux paramètres.

Un but de l'invention est de réaliser un dispositif d'asservissement d'un système à contre-réaction qui confère à l'ensemble une grande précision sans altérer la stabilité.

Un autre but de l'invention est de concevoir un dispositif permettant de corriger indépendamment l'une de l'autre l'erreur d'amplitude et l'erreur de phase.

L'invention a pour objet un système comprenant un organe à asservir dont l'asservissement est réalisé au moyen d'un sommateur élaborant un signal de commande à partir d'un signal d'analyse fourni par un quadripôle recevant un signal d'entrée,et d'un signal de correction, caractérisé en ce que le signal de correction est obtenu en sortie d'un circuit comprenant un amplificateur élaborant un signal représentant la différene entre le signal de sortie de l'organe à asservir et le signal d'entrée, deux ensembles de traitement à détection synchrone suivie d'une intégration, recevant l'un ledit signal de différence, l'autre ledit signal de différence déphasé de 90° et élaborant respectivement un premier et un second signal de modification, et un sommateur recevant en entrée lesdits signaux de modification et fournissant en sortie ledit signal de correction.

Les différents objets et caractéristiques de l'invention apparaîtront maintenant de manière plus détaillée dans la description d'exemple de réalisation donnés à titre non limitatif à laquelle sont annexées les figures suivantes qui représentent :
- la figure 1, un schéma par blocs d'un dispositif d'asservissement d'un système à contre-réaction,
- la figure 2, un module de correction,
- la figure 3, une variante d'un module de correction,
- la figure 4, un ensemble de traitement,
- la figure 5, un mode de réalisation d'un module d'extraction d'erreur,
- la figure 6, la fonction d'un circuit de mise en forme,
- la figure 7, la fonction d'un appareil de détection synchrone,
- la figure 8 une variante d'un ensemble de traitement,
- la figure 9, un mode de réalisation d'une variante d'un dispositif d'asservissement d'un système à contre-réaction,
- la figure 10, un mode de réalisation d'un dispositif d'asservissement d'un système à contre-réaction selon l'invention.

Les objets présents dans différentes figures porteront les mêmes références.

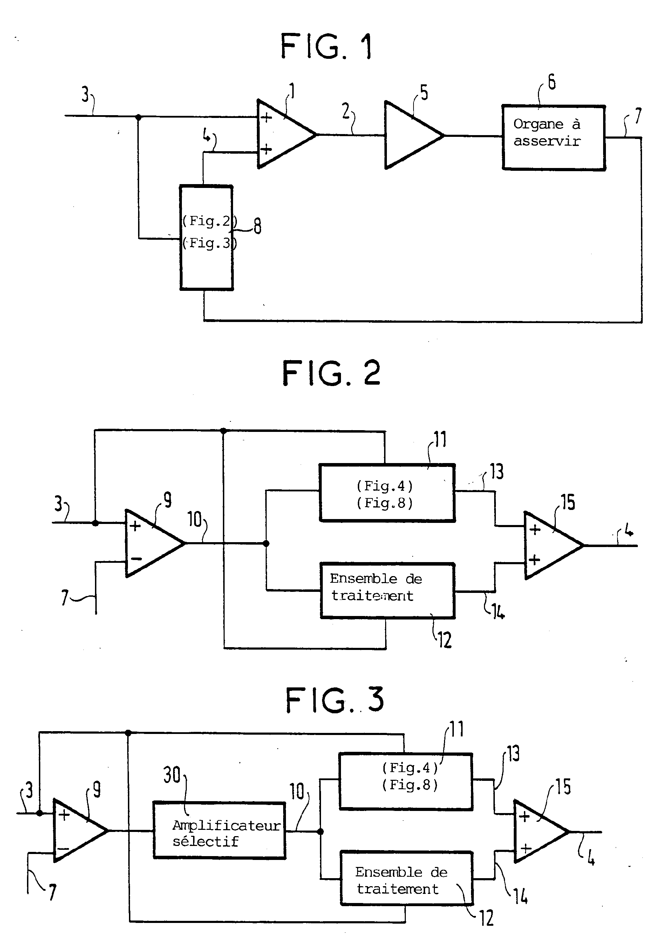

Le dispositif d'asservissement représenté dans la figure 1 comprend un sommateur 1 qui élabore un signal de commande 2 à partir d'une grandeur d'entrée 3 et d'un signal de correction 4. Le signal de commande est ensuite injecté dans un amplificateur 5, la sortie de cet amplificateur attaquant le système à asservir 6. Ce système délivre une information destinée à piloter l'asservissement sous la forme d'un signal de sortie 7. Le signal de correction 4 est élaboré dans un module de correction 8 qui réalise une combinaison du signal d'entrée et du signal de sortie.

Le module de correction 8 représenté dans le figure 2 comprend en étage d'entrée, un amplificateur d'erreur 9. L'amplificateur d'erreur 9 produit un signal d'erreur 10 qui est la différence du signal d'entrée 3 et du signal de sortie 7. Ce signal d'erreur attaque ensuite deux ensembles de traitement 11, 12 qui produisent des signaux de modification 13, 14. Ces deux signaux de modification sont ensuite ajoutés dans un circuit d'addition 15 tel qu'un sommateur dont la sortie est le signal de correction 4.

Dans une variante de réalisation du module de correction 8 représentée dans la figure 3, celui-ci comprend également un amplificateur sélectif 30 qui reçoit le signal de sortie de l'amplificateur d'erreur 9 et produit le signal d'erreur 10. Ce amplificateur sélectif, accordé sur la fréquence fondamentale du signal d'entrée 3, effectue la réjection des harmoniques présents à la sortie de l'amplificateur d'erreur 9.

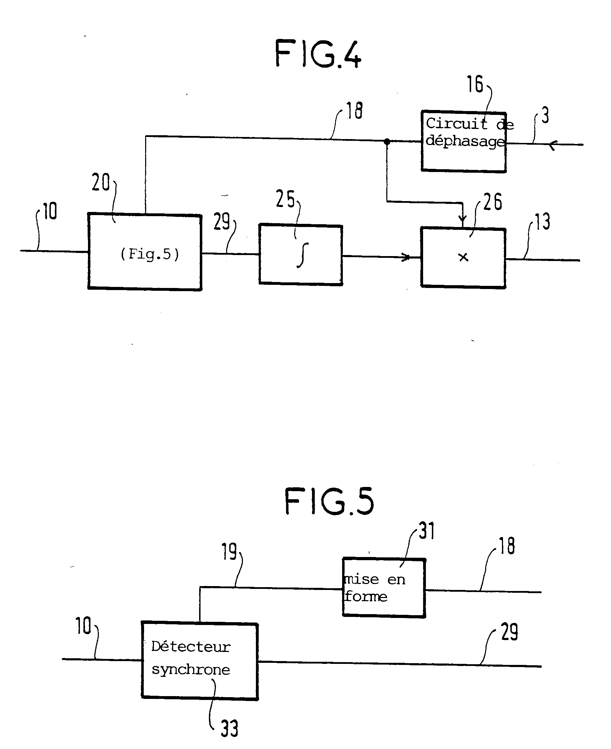

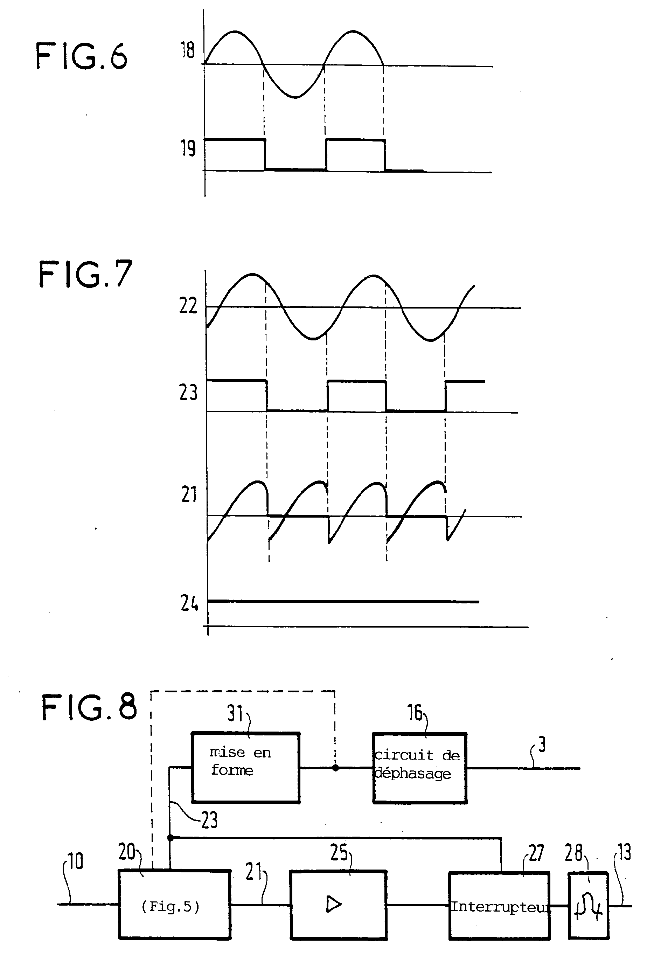

Un ensemble de traitement représenté dans la figure 4 comprend un circuit de déphasage 16 qui reçoit le signal d'entrée 3 et délivre un signal déphasé à un module d'extraction d'erreur 20. Le module d'extraction d'erreur qui reçoit également le signal d'erreur 10, consiste, dans un premier mode de réalisation, en un circuit de multiplication analogique qui effectue le produit des deux signaux appliqués sur ses entrées ; il délivre un signal d'extraction 29. Dans un second mode de réalisation représenté dans la figure 5, le module d'extraction d'erreur 20 comprend un circuit de mise en forme 31 qui produit à partir d'un signal périodique 18 un signal logique carré 19 de même période représenté dans la figure 6. Ce signal carré est injecté sur l'entrée logique d'un appareil de détection synchrone 33. Cet appareil dont le fonctionnement est symbolisé dans la figure 7, est équipé d'une entrée logique et d'une entrée analogique et délivre sur sa sortie le signal 22 appliqué sur l'entrée analogique si l'entrée logique 23 est activées, et l'opposé du signal 22 si cette entrée est inactivée. La valeur moyenne 24 du signal de sortie 21, si le signal d'entrée 22 est sinusoïdal et si le signal appliqué sur l'entrée logique est à la même fréquence, est donc proportionnelle au cosinus du déphasage entre ces deux signaux.

Le signal d'erreur 10 est appliqué sur l'entrée analogique de l'appareil de détection synchrone 33, la sortie de cet appareil étant injectée sur un circuit d'amplification 25.

Dans un mode de réalisation, ce circuit d'amplification est un intégrateur. Dans un autre mode de réalisation, ce circuit est constitué d'un filtre passe-bas et d'un amplificateur de gain élevé. Dans les deux cas, les constantes de temps sont choisies très grandes devant la période du signal d'entrée 3.

Cet ensemble de traitement comprend, pour terminer, un multiplicateur 26 qui effectue le produit du signal déphasé 18 issu du circuit de déphasage 16 et de la sortie du circuit d'amplification 25 ; le résultat en est un signal de modification 13, 14.

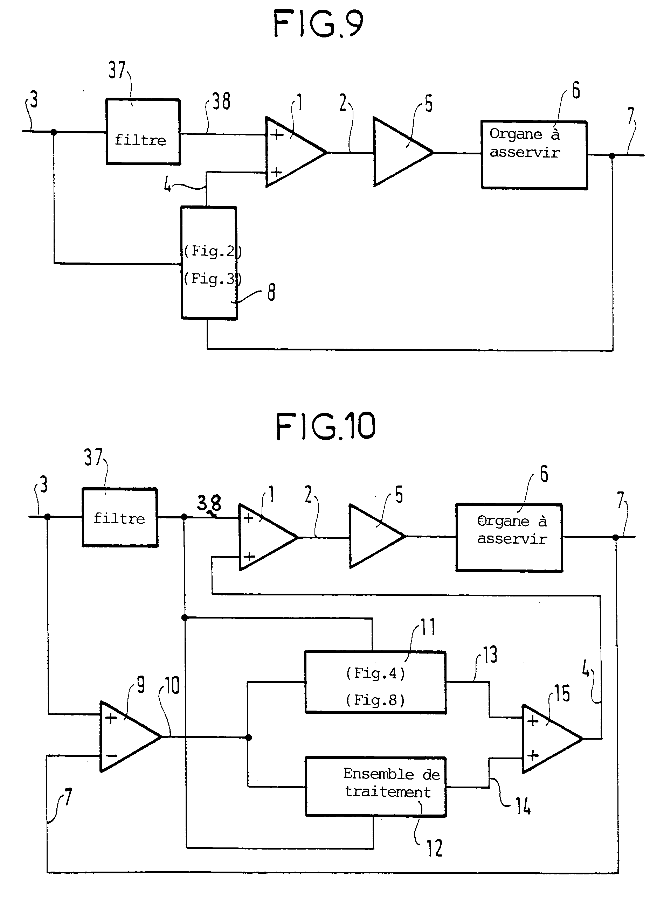

Ce multiplicateur, dans une forme de réalisation de l'ensemble de traitement représentée dans la figure 8 est remplacé par un circuit découpeur. Dans cette figure, la liaison en pointillé reliant le circuit de déphasage 16 au module d'extraction d'erreur 20 correspond au cas où ce dernier est un circuit de multiplication analogique, la liaison en trait plein reliant le circuit de mise en forme 31 au module d'extraction d'erreur correspondant au cas où celui-ci est un appareil de détection synchrone. Le circuit découpeur comprend un interrupteur analogique 27 pourvu d'une entrée logique et d'une entrée analogique qui transmet sur sa sortie le signal appliqué sur son entrée analogique si son entrée logique est activée et ne transmet rien dans le cas contraire. Le signal de sortie du circuit d'amplification 25 est appliqué sur l'entrée analogique, tandis que le signal de sortie du circuit de mise en forme 17 est injecté sur son entrée logique. Un filtre passe-bande 28 est disposé à la sortie de cet interrupteur analogique 27 car il faut éliminer la composante continue et les harmoniques pour converser uniquement la fréquence fondamentale du signal de sortie du circuit de mise en forme 31. Dans un mode particulier de réalisation, le premier ensemble de traitement est conforme à celui décrit ci-dessus et son circuit de déphasage introduit un déphasage de 90° par exemple, le second ensemble étant identique si ce n'est qu'il ne comporte pas de circuit de déphasage. On peut, plus généralement, utiliser deux ensembles de traitement comprenant chacun un circuit déphaseur, produisant des déphasages distincts.

Il apparaît donc clairement que le dispositif d'asservissement permet de faire une correction vectorielle en ajoutant au signal d'entrée 3 deux signaux de modification 13, 14 qui agissent sur la phase et sur l'amplitude du signal de commande 2.

Les sommateurs 1 (fig.1) et 15 (fig.2) qui sont représentés par deux éléments distincts pour la clarté de l'exposé sont évidemment susceptibles d'être réunis en un seul élément à trois entrées.

Suite à la description des divers éléments constitutifs du dispositif, le fonctionnement sera analysé de manière plus précise.

A la mise sous tension, la signal de correction 4 étant nul, l'amplificateur 5 voit donc sur son entrée la signal d'entrée 3. Le système à asservir 6 génère un signal de sortie 7. L'amplificateur d'erreur 9 engendre un signal d'erreur 10 qui est appliqué éventuellement à la suite d'un filtrage sur chaque ensemble de traitement 11, 12.

Pour un ensemble de traitement, la sortie du circuit d'amplification 25 voit sa tension varier sous l'influence de signal d'erreur. Cette tension appliquée au multiplicateur 26 apporte un correctif au signal d'entrée, réduisant le signal d'erreur. Si le circuit d'amplification 25 est un intégrateur, la sortie de celui-ci va dériver de plus en plus lentement jusqu'à une valeur d'équilibre correspondant à une erreur nulle. Si le circuit d'amplification est constitué d'un filtre passe-bas et d'un amplificateur l'erreur n'est pas annulée mais proportionnelle à l'inverse du gain de cet amplificateur, gain que l'on peut choisir suffisamment grand pour que l'erreur soit admise dans les spécifications du dispositif.

Lorsqu'un changement intervient dans le système à asservir 6, variation de la charge s'il s'agit d'un amplificateur par exemple, l'ensemble de traitement réagit de la même manière que décrite ci-dessus.

Les considérations relatives à un ensemble de traitement s'appliquent à l'autre. La réunion de ces deux ensembles permet donc d'annuler ou de réduire de manière satisfaisante les deux composantes du signal d'erreur. L'objectif est donc atteint.

Il est important de noter que l'élément sensible du dispositif d'asservissement est l'amplificateur 9. C'est la précision de cet élément qui détermine la précision du dispositif d'asservissement car les erreurs des autres éléments, celles des multiplicateurs et des circuits de déphasage notamment, sont compensées par cette boucle. En particulier, les rotations de phase engendrées par l'amplificateur sélectif 30 sont sans effet.

Ce dispositif trouvera application dans les amplificateurs asservis, notamment dans ceux que l'on utilise pour la protection et le contrôle des réseaux de distribution d'électricité. De tels amplificateurs ont un gain en puissance très important, puisqu'ils traitent un signal de quelques mW issu de diviseurs capacitifs pour l'amener jusqu'à 50 ou 100 VA. Ils assurent une fonction de protection et doivent donc assurer une précision de 3% avec une grande rapidité. Ils ont également une fonction de mesure qui nécessite une précision de 0,2% sur une longue période d'intégration.

Le dispositif s'appliquera également dans des asservissements tel que des servomécanismes.

Dans une variante de réalisation du dispositif d'asservissement d'un système à contre-réaction, l'ensemble des considérations précédentes s'appliquent. De plus ce dispositif comprend un quadripôle 37 tel qu'un circuit de filtrage, qui reçoit le signal d'entrée 3. Ce circuit de filtrage, dans un mode de réalisation représenté dans la figure 9, produit un signal de sortie qui est appliqué à la place du signal d'entrée 3 sur le sommateur 1.

Dans un mode de réalisation selon l'invention et représenté dans la figure 10, le signal de sortie du circuit de filtrage 37 comme précédemment est appliqué sur le sommateur 1, mais, de plus, il est appliqué sur l'entrée des circuits de déphasage 16 des deux ensembles de traitement 11, 12 à la place du signal d'entrée 3.

Ce circuit de filtrage 37, un filtre passe-haut par exemple, élimine les composantes continues ou apériodiques indésirables que peut présenter le signal d'entrée 3 en régime transitoire.

Dans le cas de la mesure de la haute tension d'une ligne de distribution d'électricité au moyen d'un diviseur capacitif, le signal de sortie de ce diviseur qui sera le signal d'entrée 3 du dispositif d'asservissement, peut présenter de telles composantes indésirables. En effet la ligne présente une très forte constante de temps lorsqu'elle est ouverte, notamment après l'ouverture d'un disjoncteur. Si le réenclenchement du dispositif intervient dans un délai court devant cette constante de temps, le condensateur du diviseur capacitif qui reçoit une tension égale à la haute tension diminuée de la tension de mesure ne sera pas déchargé et le signal de sortie de ce diviseur sera la somme du signal de mesure proprement dit et d'un signal parasite à décroissance exponentielle typique de la décharge d'un condensateur.

Le circuit de filtrage 37 permet d'éliminer ce signal parasite et tous les inconvénients qu'il peut engendrer.

## Revendications

1. Système comprenant un organe à asservir (6) dont l'asservissement est réalisé au moyen d'un sommateur (1) élaborant un signal de commande (2) à partir d'un signal d'analyse (38) fourni par un quadripôle (37) recevant un signal d'entrée (3), et d'un signal de correction (4), caractérisé en ce que le signal de correction (4) est obtenu en sortie d'un circuit comprenant un amplificateur (9) élaborant un signal (10) représentant la différene entre le signal de sortie (7) de l'organe (6) à asservir et le signal d'entrée (3), deux ensembles de traitement (11, 12) à détection synchrone suivie d'une intégration, recevant l'un ledit signal de différence (10), l'autre ledit signal de différence déphasé de 90° et élaborant respectivement un premier (13) et un second (14) signal de modification, et un sommateur (15) recevant en entrée lesdits signaux de modification (13, 14) et fournissant en sortie ledit signal de correction (Fig. 10).

## Patentansprüche

1. System mit einem zu regelnden Organ (6), dessen Regelung mit Hilfe eines Summierglieds (1) erfolgt, das ein Steuersignal (2) aufgrund eines Analysesignals (38) erarbeitet, wobei das Analysesignal von einem Vierpol (37) geliefert wird, der ein Eingangssignal (3) und ein Korrektursignal (4) empfängt, dadurch gekennzeichnet, daß das Korrektursignal (4) am Ausgang einer Schaltung erhalten wird, die einen Verstärker (9), der ein die Differenz zwischen dem Ausgangssignal (7) des zu regelnden Organs (6) und dem Eingangssignal (3) darstellendes Signal erarbeitet, zwei Verarbeitungseinheiten (11, 12) mit einem Synchrondetektor und nachfolgender Integration, von denen die eine das Differenzsignal (10) und die andere das Differenzsignal um 90° phasenverschoben empfängt und die ein erstes (13) bzw. zweites Veränderungssignal erzeugen, sowie ein Summierglied (15) enthält, das eingangsseitig die beiden Veränderungssignale (13, 14) empfängt und am Ausgang das Korrektursignal liefert (Figur 10).

## Claims

1. System comprising a unit (6) to be controlled by an adder (1) adapted to produce a control signal (2) from a correction signal (4) and an analysis signal (38) supplied by a four-pole network (37) adapted to receive an input signal (3), characterised in that the correction signal (4) is obtained at the output of a circuit including an amplifier (9) producing a signal (10) representing the difference between the output signal (7) of the unit (6) to be controlled and the input signal (3), two processors (11, 12) implementing synchronous detection followed by integration, one receiving said difference signal (10) and the other receiving said difference signal phase-shifted by 90°, and respectively producing a first modification signal (13) and a second modification signal (14), and an adder (15) receiving said modification signals (13, 14) at its inputs and supplying said correction signal at its output (Fig. 10).
